# DEMANDE DE BREVET EUROPEEN

(11) **EP 1 321 041 A1**
(43) Date de publication de la demande: **25.06.2003**
(21) Numéro de dépôt: 02293105.9
(22) Date de dépôt: 16.12.2002
(51) Int. Cl.: A22C 5/00, A23B 4/00, A22C 9/00

(54) **Procédé et dispositif pour la préparation de produits alimentaires malaxés et fumés**

(30) Priorité: 20.12.2001 FR 0116545
(71) Demandeur: Lutetia, 95400 Arnouville les Gonesse (FR)
(72) Inventeur: Longo, Philippe, 92190 Meudon (FR); Kulikowski, Stéphane, 72380 Montbizot (FR); Frenot, Jean-Claude, 95400 Arnouville-Les-Gonesse (FR)
(74) Mandataire: Leszczynski, André

(57) **Abrégé**

La présente invention concerne un procédé de préparation d'un produit alimentaire comprenant les étapes consistant à :
a) introduire dans la cuve (1) d'un malaxeur un produit alimentaire,
b) malaxer ledit produit alimentaire ainsi introduit,
c) mettre en contact ledit produit alimentaire avec un agent de fumage dans ladite cuve du malaxeur,
ledit procédé comprenant en outre au moins une étape consistant à effectuer un séchage du produit alimentaire dans ladite cuve du malaxeur.

## Description

La présente invention a pour objet un procédé et un dispositif de préparation de produits alimentaires, en particulier de produits de type camé ou des produits de la mer, malaxés et fumés.

Parmi les différents produits alimentaires fumés de type camé, les produits de charcuterie ainsi que certaines pièces de volaille en constituent une part importante.

Les produits de charcuterie fumés particulièrement prisés par les consommateurs, sont notamment le jambon, la poitrine, la longe et la palette et parmi les pièces de volaille, les magrets, les filets, les pilons et les blancs de volailles.

Les produits de la mer constituent également une part importante des produits commercialisés sous une forme fumée.

Parmi les produits de la mer fumés particulièrement prisés par les consommateurs, on peut citer un certain nombre de poissons tels que l'anguille ou bien encore le saumon, la truite, le hareng ou l'églefin, habituellement appelé haddock sous sa forme fumée, ces derniers étant plus généralement fumés sous forme de filets.

La plupart des procédés de fumage connus à ce jour s'effectuent dans des chambres conçues exclusivement à cet effet, ceux-ci consistant essentiellement à placer les produits alimentaires à fumer dans une chambre soit sur des tringles de suspension, soit dans des casiers perméables à la fumée et à introduire ensuite de la fumée provenant d'une combustion ou d'un condensat liquide de fumée, également connu sous le nom de fumée liquide.

L'utilisation d'une chambre spéciale pour le fumage présente de nombreux inconvénients.

En effet, elle accroît la surface occupée par le matériel nécessaire à la préparation du produit et augmente donc le coût de ce dernier.

De plus, elle augmente le nombre de manipulations du produit nécessaires à sa préparation, ce qui non seulement en augmente le coût, mais surtout augmente notablement le risque de contamination notamment microbienne du produit alimentaire.

Le fumage par enrobage d'un condensat liquide de fumée à l'intérieur du dispositif ayant servi au malaxage du produit, appelé malaxeur, a par ailleurs déjà été envisagé. Cependant, le produit fumé par ce procédé ne présente pas, lorsqu'il est extrait du malaxeur, une coloration satisfaisante.

Dans ce procédé, l'obtention d'un produit fumé de coloration satisfaisante nécessite, immédiatement après le fumage, un transfert du produit dans une cellule séparée afin de le soumettre à un étuvage.

Ce procédé de fumage nécessite donc également l'utilisation d'une chambre distincte du dispositif général de préparation du produit, ce qui, de même que précédemment, augmente le coût de préparation du produit, ainsi que les risques de contamination.

Après différentes études, on a constaté de façon surprenante et inattendue qu'il était possible de préparer un produit alimentaire malaxé et fumé dans un dispositif unique, appelé par la suite malaxeur dans la présente description, et d'obtenir un produit malaxé et fumé de qualité organoleptique, y compris de couleur, au moins égale à celle des produits obtenus par les procédés de fumage traditionnels.

De plus le procédé de l'invention réduit considérablement le risque de contamination notamment microbienne du produit alimentaire.

La présente invention se rapporte donc à un procédé de préparation d'un produit alimentaire malaxé et fumé comprenant les étapes consistant à :
a) introduire dans la cuve d'un malaxeur un produit alimentaire,
b) malaxer ledit produit alimentaire ainsi introduit,
c) mettre en contact ledit produit alimentaire avec un agent de fumage dans ladite cuve du malaxeur,
ledit procédé comprenant en outre au moins une étape consistant à effectuer un séchage du produit alimentaire dans ladite cuve du malaxeur.

Selon un premier mode de réalisation du procédé de l'invention, la cuve du malaxeur est montée rotative et l'on provoque des rotations de ladite cuve de façon à obtenir un malaxage par retombées dudit produit alimentaire.

Selon un second mode de réalisation du procédé de l'invention, le malaxeur est muni d'un organe de brassage qui est actionné pour obtenir un malaxage par brassage.

Cet organe de malaxage peut être par exemple une pale ou analogue.

Selon un troisième mode de réalisation du procédé de l'invention, la cuve du malaxeur est reliée à un organe d'extraction de gaz et l'on actionne ledit organe d'extraction de gaz pour établir dans la cuve une dépression par rapport à l'atmosphère ambiante et l'on maintient cette dépression pendant au moins une partie de l'étape de malaxage.

La pression dans la cuve pendant au moins une partie du malaxage peut être par exemple comprise entre 20 et 500 mbar selon le produit préparé.

Bien entendu, le malaxage dans le procédé de l'invention peut être effectué à la fois par retombées du produit alimentaire dans ladite cuve et par brassage de celui-ci, éventuellement à une pression inférieure à la pression atmosphérique.

Selon des modes de réalisation particuliers de l'invention, on peut en outre procéder à une injection de saumure et/ou de sel préalablement au malaxage du produit alimentaire.

Selon un mode de réalisation du procédé de l'invention, l'agent de fumage utilisé est un agent de fumage gazeux produit par combustion, dans au moins un générateur de fumée relié à la cuve du malaxeur, de bûches, de sciures, ou de copeaux de bois tels que du bois de noyer, de hêtre, de chêne, de pommier, de sapin, de cerisier ou d'érable ou encore d'un mélange de deux ou plusieurs de ces bois.

Chaque bois permet de conférer des propriétés gustatives différentes, et parmi ceux plus particulièrement recherchés on peut citer le bois de noyer et le bois de chêne.

Dans ce mode de réalisation du procédé de l'invention, on fait généralement circuler l'agent de fumage à l'intérieur de la cuve du malaxeur, par exemple à l'aide d'au moins un organe d'extraction de gaz relié à la cuve du malaxeur. L'organe d'extraction de gaz peut être notamment une pompe à vide reliée audit malaxeur ou un extracteur.

Lorsque la cuve est reliée à plusieurs organes d'extraction de gaz, ces organes peuvent être de même type ou différents.

Dans ce mode de réalisation du procédé de l'invention, la durée de l'étape de fumage est généralement comprise entre 3 et 8 heures et en particulier comprise entre 4 et 6 heures.

Selon un autre mode de réalisation de l'invention, l'agent de fumage est sous la forme d'un condensat liquide de fumée, dans la cuve du malaxeur.

Les condensats liquides de fumée également appelés « fumée liquide », sont à l'heure actuelle de plus en plus utilisés. En effet, l'utilisation de ces condensats comme agent de fumage présente de nombreux avantages tels que notamment une réduction du temps requis pour le fumage et la suppression du risque d'incendie présenté par le procédé de fumage utilisant la combustion.

On rappellera que ces condensats résultent d'une mise en solution des composants de la fumée et qu'il en existe donc divers types dont le choix dépendra du type de fumage souhaité.

Il est en outre possible, si désiré, de modifier facilement leurs compositions et en particulier d'éliminer de celles-ci des composés réputés cancérigènes tels que les benzopyrènes.

De préférence, dans le procédé de l'invention, le condensat liquide de fumée est introduit dans la cuve par atomisation.

Dans ce mode de réalisation du procédé de l'invention, on maintient de préférence une dépression de la cuve du malaxeur pendant au moins une partie de l'introduction de l'agent de fumage, la pression à l'intérieur de la cuve étant alors généralement comprise entre 20 et 45 mbar, et en particulier comprise entre 30 et 35 mbar.

Cette dépression peut être obtenue à l'aide d'une pompe à vide reliée à la cuve du malaxeur.

Selon un mode de réalisation particulier du procédé de l'invention, on introduit en outre dans la cuve de la vapeur d'eau pendant au moins une partie de l'étape d'introduction du condensat de fumée.

Dans ce mode de réalisation du procédé de l'invention utilisant comme agent de fumage un condensat liquide de fumée, la durée de l'étape de fumage est généralement comprise entre 10 et 60 minutes, et en particulier comprise entre 20 et 40 minutes.

Selon l'un des modes de réalisation du procédé de l'invention, la cuve du malaxeur est montée rotative, et l'on provoque la rotation de la cuve pendant l'étape de fumage quel que soit l'agent de fumage utilisé. La vitesse de rotation de la cuve pendant cette étape de fumage peut être par exemple comprise entre 0,1 et 5 tr/mn et en particulier comprise entre 0,5 et 1 tr/mn.

Le procédé de l'invention comprend également nécessairement au moins une étape de séchage effectuée dans la cuve du malaxeur.

Le séchage est généralement conduit de façon à obtenir une perte en eau du produit alimentaire au moins égale à 4 % en poids par rapport au poids du produit alimentaire introduit dans la cuve.

Selon un mode de réalisation particulier, pour effectuer ce séchage, on introduit dans la cuve le gaz de séchage, on le fait circuler, puis on l'extrait de la cuve.

Le gaz de séchage utilisé dans le procédé de l'invention est bien entendu choisi parmi les gaz connus compatibles avec un usage alimentaire du produit avec lequel il est mis en contact.

Ce gaz peut être par exemple de l'air.

On peut en particulier faire circuler ce gaz à l'aide d'au moins un organe d'extraction de gaz relié à la cuve du malaxeur. Cet organe peut être notamment une pompe à vide ou un extracteur.

Dans le procédé de l'invention, on peut également effectuer le séchage, par extraction de gaz, de façon à augmenter le vide appliqué dans la cuve du malaxeur, par exemple pour l'obtention d'une pression comprise entre 2 et 10 mbar et en particulier allant de 3 à 7 mbar. Cette pression peut être par exemple obtenue à l'aide d'une pompe à vide, en particulier d'une pompe à vide multi-étage.

Selon un mode de réalisation particulier de l'invention, l'étape de séchage comprend le fait (i) d'introduire un gaz de séchage, puis (ii) de dépressuriser la cuve à une pression de 2 à 10 mbar, et éventuellement de répéter les étapes (i) et (ii) autant de fois que désiré.

Selon un mode de réalisation particulier du procédé de l'invention, celui-ci comprend une étape de séchage du produit alimentaire préalablement à l'introduction de l'agent de fumage.

On peut en particulier effectuer cette étape de séchage de sorte qu'elle produise un séchage en surface du produit alimentaire et notamment de sorte que le poids du produit obtenu à l'issue de cette étape soit inférieur de 0,5 à 3 % au poids du produit obtenu avant ladite étape.

La mise en oeuvre de cette étape de séchage préalablement à l'introduction de l'agent de fumage favorise par la suite l'accroche de l'agent de fumage sur le produit à traiter.

Selon un autre mode de réalisation du procédé de l'invention, celui-ci comprend une étape de séchage du produit alimentaire postérieurement à son fumage.

La mise en oeuvre de cette étape de séchage postérieurement au fumage du produit alimentaire favorise la stabilisation de l'agent de fumage sur le produit alimentaire.

Le procédé de l'invention peut également comprendre une étape de maturation du produit alimentaire, ledit produit étant alors soumis à une élévation de température, par exemple à un chauffage à une température d'au moins 10°C, en particulier comprise entre 20 et 40°C et notamment comprise entre 25 et 30°C.

Cette étape peut être confondue avec l'étape de séchage lorsque celle-ci utilise un gaz de séchage.

Dans ce mode de réalisation du procédé de l'invention, celui-ci comprend donc au moins une étape de séchage et de maturation dans laquelle on fait circuler un gaz de séchage, par exemple de l'air, ledit gaz étant à une température supérieure à la température du produit alimentaire, par exemple ledit gaz ayant été chauffé à une température d'au moins 20°C.

Dans le procédé de l'invention, l'étape de maturation peut également être distincte de l'étape de séchage.

Dans ce mode de réalisation du procédé de l'invention, on peut par exemple introduire et faire circuler de la vapeur d'eau dans la cuve du malaxeur. L'étape de maturation est alors généralement suivie par une étape de séchage en particulier effectuée par dépressurisation comme décrit précédemment.

De façon générale, le procédé de l'invention peut être mis en oeuvre à des températures relativement basses.

Ainsi, la température à l'intérieur de la cuve du malaxeur durant toutes les étapes dudit procédé est généralement inférieure à 45°C, de préférence inférieure à 30°C et par exemple inférieure ou égale à 25°C.

Bien entendu, la température à l'intérieur de la cuve peut varier au cours de la mise en oeuvre du procédé de l'invention. Elle peut notamment varier au fur et à mesure de la mise en oeuvre des différentes étapes dudit procédé et en fonction des modes de réalisation utilisés.

Le procédé de l'invention peut ainsi être mise en oeuvre essentiellement à une température inférieure à 15°C et en particulier inférieure ou égale à 6°C et ne comprendre qu'une ou plusieurs étapes durant lesquelles la température est supérieure à 15°C.

Le procédé de l'invention peut donc permettre de réduire le temps durant lequel la température, dans le produit alimentaire, est comprise dans l'intervalle de températures favorables à la multiplication d'un certain nombre de microbes indésirables susceptibles d'être présents dans ce type de produit, tels que par exemple *Listeria monocytogenes*. Le procédé de l'invention favorise donc moins la prolifération de ces microbes.

De plus, selon un mode particulier de réalisation du procédé selon l'invention, ledit procédé comprend une étape de séchage après fumage du produit alimentaire, dans laquelle on effectue une phase finale de dépressurisation, éventuellement prolongée, ayant pour effet de refroidir le produit par exemple à une température comprise entre + 2 et 6°C et en particulier d'environ + 4°C.

Avec ce mode de réalisation du procédé, il n'est donc pas nécessaire de transférer le produit malaxé et fumé dans une chambre froide pour le refroidir, ce qui permet donc, de nouveau, un gain de temps, un gain de manipulation et un meilleur contrôle de la qualité microbiologique.

En outre, avec le procédé de l'invention, il est également possible d'obtenir des produits présentant une valeur d'activité de l'eau (Aw) plus faible qu'avec les procédés traditionnels et donc de freiner le développement d'un certain nombre de microbes.

Le procédé de l'invention permet donc une amélioration notable de la sécurité sanitaire des produits préparés par diminution des risques de contamination et par utilisation de conditions moins propices au développement des germes microbiens susceptibles de contaminer ces produits.

Le malaxeur utilisé dans le procédé de l'invention est en particulier du type du malaxeur décrit dans la demande de brevet de la société déposante EP-A-1 066 762, mais comporte en outre un certain nombre de modifications structurelles permettant d'effectuer l'ensemble des opérations nécessaires au fumage.

La présente invention a donc également pour objet un dispositif pour la préparation d'un produit alimentaire malaxé et fumé, comprenant un malaxeur comportant une cuve munie d'une porte étanche à l'air pour le chargement et le déchargement des produits à traiter, au moins un moyen de malaxage, au moins un organe d'extraction de gaz, au moins un système d'introduction dans la cuve d'un agent de fumage, et éventuellement au moins un système d'introduction d'un gaz de séchage.

Selon un mode de réalisation particulier dudit dispositif, ladite cuve est montée rotative, le dispositif comprenant des moyens d'entraînement en rotation de ladite cuve, formant ainsi un moyen de malaxage.

Ladite cuve possède généralement un axe de rotation sensiblement horizontal, c'est-à-dire horizontal ou faiblement incliné par rapport à l'horizontal, par exemple un axe faisant un angle avec l'horizontale inférieur à 20° et en particulier de 15° environ.

Dans un autre mode de réalisation, la cuve possède un axe de rotation incliné par rapport à l'horizontale, avec un angle inférieur à 50°, et de préférence de 45° environ.

Le moyen de malaxage utilisé dans le dispositif de l'invention peut être également un organe de brassage tel que par exemple une pale ou analogue.

Le dispositif de l'invention peut bien entendu comprendre les deux moyens de malaxage définis ci-dessus.

Dans le dispositif de l'invention, l'organe d'extraction de gaz peut être une pompe à vide ou un extracteur. Le dispositif de l'invention peut aussi comprendre plusieurs organes d'extraction de gaz de même type ou différents.

Dans le dispositif de l'invention, le système d'introduction dans la cuve d'un agent de fumage peut être par exemple une canalisation reliée à un générateur de fumée lorsque l'agent de fumage est un agent de fumage gazeux produit par combustion ou peut être un système d'atomisation, comprenant par exemple une buse ou une aiguille de pulvérisation, reliée à une canalisation, débouchant dans la cuve lorsque ledit agent de fumage est un condensat liquide de fumée.

Le dispositif peut en outre comprendre un système d'introduction d'un gaz de séchage tel qu'un générateur d'air éventuellement chauffé relié à ladite cuve.

Le dispositif peut éventuellement comprendre de plus un système d'introduction de vapeur d'eau relié à ladite cuve du malaxeur.

Les systèmes d'introduction de gaz et organes d'extraction de gaz sont agencés dans le dispositif de sorte qu'ils permettent une circulation des gaz dans la cuve du malaxeur.

La porte étanche du dispositif selon l'invention peut également comporter un raccord apte à permettre la rotation de la cuve autour de son axe sans détérioration des organes d'extraction de gaz, du système d'introduction d'un gaz de séchage et/ou d'un agent de fumage.

L'organe d'extraction de gaz peut éventuellement être relié à ce raccord par une canalisation comportant au moins un second raccord apte à permettre la rotation des parties de ladite canalisation en amont et en aval de ce second raccord l'une par rapport à l'autre.

On va maintenant décrire des modes de mises en oeuvre de l'invention en se référant au dessin annexé sur lequel :
- la figure 1 représente une vue schématique longitudinale d'un premier exemple de dispositif de l'invention,
- la figure 2 représente une vue schématique longitudinale d'un second exemple de dispositif de l'invention, et
- la figure 3 représente une vue en perspective tronquée d'un dispositif selon l'invention.

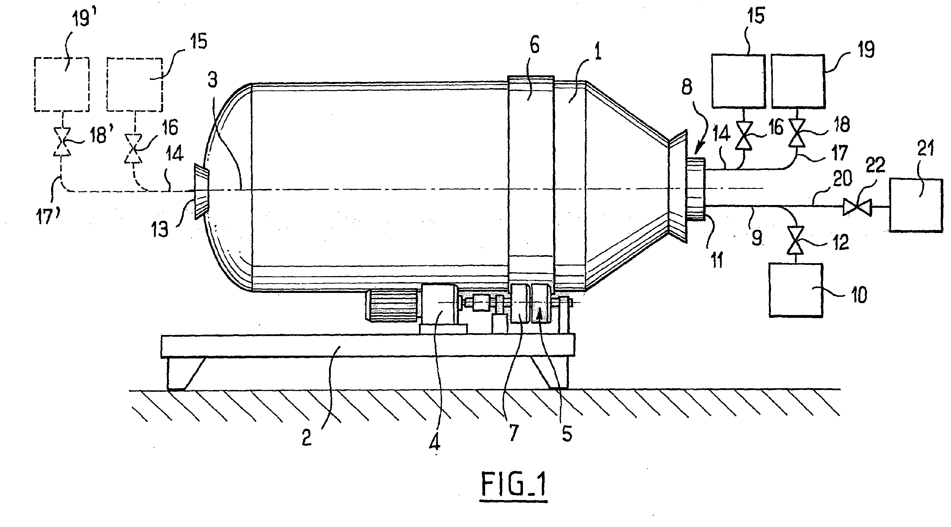

On a représenté sur la figure 1 un dispositif conforme à l'invention comportant une cuve 1 montée sur un châssis 2 autour d'un axe de rotation sensiblement horizontal 3. Un moyen de brassage tel qu'une pale droite ou hélicoïdale (non représentée) est prévu à l'intérieur de la cuve.

Pour entraîner la cuve 1 en rotation, le châssis 2 comporte un moteur 4 solidaire en rotation d'un organe d'entraînement 5.

La cuve comporte une zone de friction périphérique 6 qui coopère avec une roue de friction 7 de l'organe d'entraînement 5.

La partie avant de la cuve, située à droite sur le dessin, présente une forme tronconique convergente à l'extrémité de laquelle est située une porte étanche 8 qui permet le chargement et le déchargement des produits à traiter dans la cuve 1.

Dans la partie centrale de la porte étanche pénètre une canalisation 9 reliant l'intérieur de la cuve 1 à une pompe à vide 10, la canalisation 9 étant pourvue d'une vanne 12.

Sur la canalisation 9 est branchée une canalisation 20 pourvue d'une vanne 22 reliant l'intérieur de la cuve à un extracteur 21.

Dans la partie centrale de la cuve peut pénétrer également une canalisation 14 reliée à un générateur de fumée 15 et munie d'une vanne 16.

Une canalisation 17 est branchée sur la canalisation 14 entre la vanne 16 et la cuve 1. Cette canalisation 17 est reliée à un générateur de vapeur 19 et est pourvue d'une vanne 18.

Les canalisations 9 et 14 sont pourvues d'un raccord tournant 11 qui permet la rotation de la cuve 1 autour de son axe 3 sans détérioration des canalisations.

Dans une mise en oeuvre particulière de l'invention, le générateur de fumée 15 n'est pas situé à l'avant mais à l'arrière (à gauche sur le dessin) de la cuve 1.

La canalisation 14 munie de la vanne 16 et reliée au générateur de fumée 15 pénètre à l'intérieur de la cuve 1 par un raccord tournant 13 situé à l'arrière de la cuve 1.

La canalisation 17 est alors reliée directement à l'intérieur de la cuve 1 par la porte 8 et le raccord tournant 11.

Sur la canalisation 14 est éventuellement branchée une canalisation 17' pourvue d'une vanne 18' et reliée à un générateur de vapeur ou d'air chaud 19'.

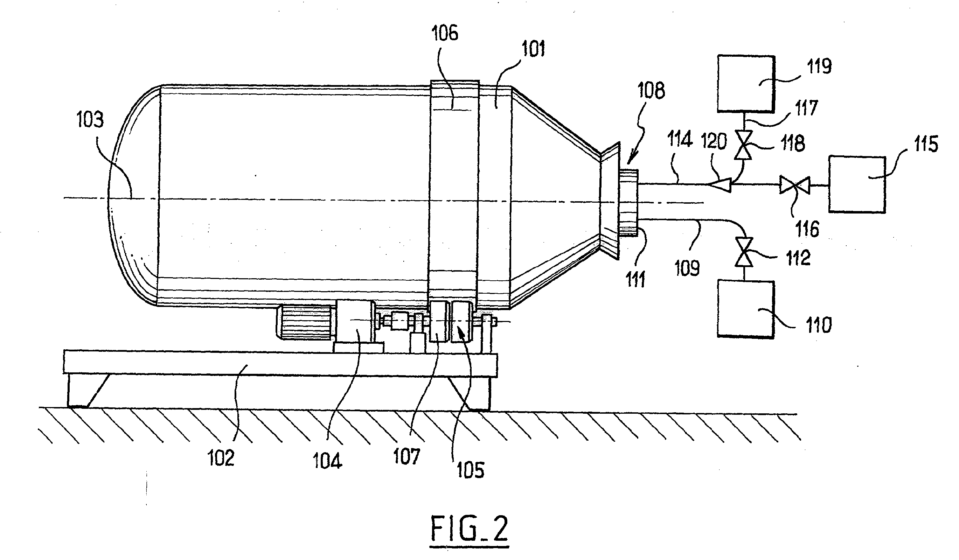

On a représenté sur la figure 2 un dispositif conforme à l'invention comportant une cuve de forme allongée 101 montée sur un châssis 102 autour d'un axe sensiblement horizontal 103.

Pour entraîner la cuve 101 en rotation, le châssis 102 comporte un moteur 104 solidaire en rotation d'un organe d'entraînement 105.

La cuve comporte une zone de friction périphérique 106 qui coopère avec une roue de friction 107 de l'organe d'entraînement 105.

La partie avant de la cuve, située à droite sur le dessin, présente une forme tronconique convergente à l'extrémité de laquelle est située une porte étanche 108 qui permet le chargement et le déchargement des produits à traiter dans la cuve 101.

Dans la partie centrale de la porte étanche pénètre une canalisation 109 reliant l'intérieur de la cuve 101 à une pompe à vide 110, la canalisation 109 étant pourvue d'une vanne 112.

Dans la partie centrale de la porte étanche pénètre également une canalisation 114 reliée à une aiguille d'atomisation équipée d'un système Venturi 120 relié à un récipient contenant un condensat liquide de fumée 115, la canalisation 114 étant pourvue d'une vanne 116.

Sur la canalisation 114 est éventuellement branchée une canalisation 117 reliée à un générateur de vapeur ou d'air chaud 119, la canalisation 117 étant pourvue d'une vanne 118.

Les canalisations 109 et 114 sont pourvues d'un raccord tournant 108 qui permet la rotation de la cuve 101 autour de son axe 103 sans détérioration des canalisations.

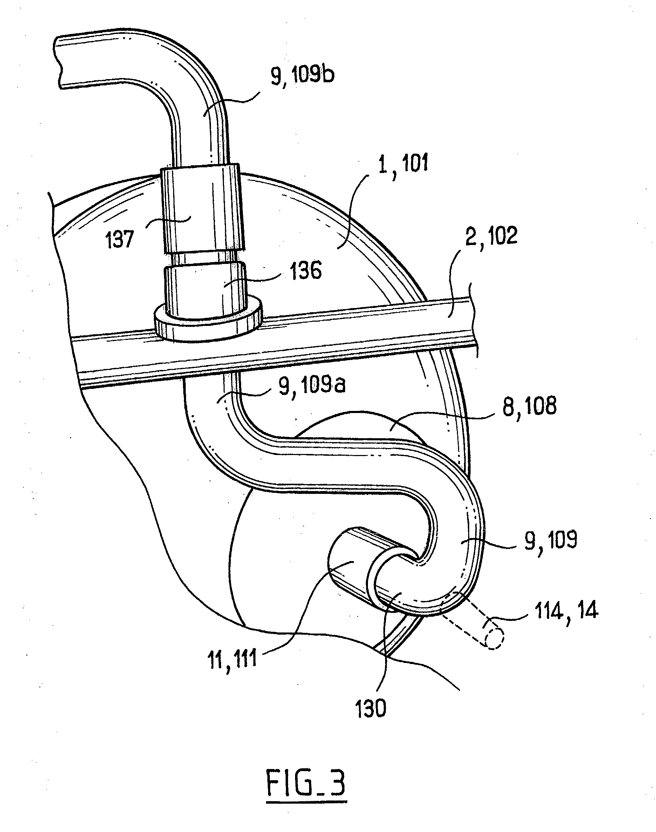

On a représenté sur la figure 3 une vue détaillée de la partie avant d'un dispositif conforme à l'invention. Il comporte une cuve 1, 101 montée sur un châssis 2, 102 et une porte 8, 108 comportant un raccord tournant 11, 111 sur lequel est branchée une canalisation 130, qui permet la rotation de la cuve 1, 101 sans détérioration de la canalisation.

Sur cette canalisation 130 est éventuellement branchée une canalisation 14, 114.

La canalisation 14, 114 est reliée à un réservoir de fumée liquide et à un générateur de vapeur ou d'air chaud, et comporte un tube souple lui permettant d'être déformée lors de l'ouverture de la porte sans être détériorée.

Sur la canalisation 130 est branchée la canalisation 9, 109 reliée à la pompe à vide et éventuellement à l'extracteur.

Cette canalisation est équipée d'un raccord tournant 136 pour permettre la rotation de la canalisation 9, 109 fixée au châssis 2, 102 permettant la rotation de la partie amont 9, 109a de la canalisation 9, 109 par rapport au châssis 2, 102 lors de l'ouverture de la porte 8, 108 et d'un raccord tournant 137 permettant la rotation de la partie avale 9, 109b de la canalisation 9, 109 par rapport au dispositif selon l'invention.

On va maintenant décrire plus en détail des modes de mise en oeuvre préférés du dispositif selon l'invention.
1) Fumage utilisant un agent de fumage gazeux produit par la combustion de bûches, de sciures et/ou de copeaux.
   Selon ce mode de réalisation, les produits alimentaires en particulier carnés, après avoir été malaxés, maturés, et séchés en surface par la succession d'une phase d'introduction de vapeur d'eau à l'aide du générateur 19, et d'une phase de dépressurisation à l'aide de la pompe 10, telles que décrites dans le document EP-A-1 066 762, sont soumis dans la cuve 1 à une circulation de fumée provenant du générateur 15 placé à l'extrémité de la cuve 1. La circulation de la fumée à l'intérieur de la cuve est régulée par l'extracteur 21 disposé à l'autre extrémité de la cuve, la pression à l'intérieur de la cuve étant généralement comprise entre 100 et 500 mbar.
   Dans cette étape, seules les vannes 22 et 16 sont ouvertes alors que les autres restent fermées.
   Le cycle de fumage peut être continu ou intermittent et d'une durée comprise par exemple entre 4 et 6 heures.
   La vitesse de rotation du malaxeur durant l'étape de fumage est généralement comprise entre 0,1 et 5 tr/mn et de préférence entre 0,5 et 3 tr/mn.
   L'opération de fumage une fois terminée, on peut procéder ensuite à une étape de séchage dans le malaxeur, ce qui améliore la fixation de la fumée sur les produits traités.
   Cette étape de séchage peut être réalisée, selon une première forme de réalisation, à l'aide de la pompe à vide 10 sous une pression comprise entre environ 2 et 10 mbar.
   Le séchage pourrait être également effectué selon une autre forme de réalisation par envoi d'air chaud dans la cuve du malaxeur par l'intermédiaire d'un générateur d'air chaud (non représenté).
   Selon une troisième forme de réalisation, le séchage peut être effectué par la succession d'envois d'air chaud et de dépressurisation tels que décrits ci-dessus, éventuellement avec répétition de ladite succession.
   La durée de l'étape de séchage est généralement comprise entre 30 minutes et 30 heures en particulier entre 1 heure et 10 heures, et l'on procède ensuite au déchargement des produits alimentaires fumés.
2) Fumage à partir de condensat liquide de fumée introduit par atomisation.
   Selon ce mode de réalisation, les produits alimentaires sont malaxés et séchés en surface dans la cuve 101 selon le procédé décrit dans le document EP-A-1 066 762.
   Puis, dans la cuve 101, à une pression généralement comprise entre 30 à 35 mbar à l'aide de la pompe à vide 110, on injecte par atomisation un condensat liquide de fumée à partir d'un système d'introduction comportant une canalisation débouchant à l'intérieur de la cuve, et reliant une aiguille de pulvérisation prolongée par un système Venturi 120, lui-même relié par une canalisation à un récipient 115, ledit récipient étant à une pression supérieure à celle présente à l'intérieur de la cuve 101 du malaxeur, ledit récipient 115 étant apte à supporter une dépressurisation.
   Selon une variante de ce mode de réalisation, le condensat liquide de fumée peut être introduit dans la cuve 101 en présence de vapeur d'eau provenant du générateur 119.
   La durée de l'étape de fumage utilisant un condensat liquide de fumée dans laquelle la mise en contact du produit à traiter avec l'agent de fumage peut être simultanée à l'introduction dudit agent de fumage, est généralement comprise entre 10 minutes et 1 heure et en particulier comprise entre 20 minutes et 40 minutes.
   La vitesse de rotation du malaxeur durant l'étape de fumage est généralement comprise entre 0,1 et 5 tr/mn et de préférence comprise entre 0,5 et 3 tr/mn.
   L'étape de fumage étant terminée, on procède alors au séchage selon le même mode opératoire que celui décrit précédemment pour le fumage à l'aide d'un agent de fumage gazeux, et on procède au déchargement du produit alimentaire traité.
   On va maintenant décrire à titre d'exemples deux modes de mise en oeuvre du procédé de l'invention, l'un utilisant un agent de fumage gazeux et l'autre utilisant un condensat liquide de fumée tels qu'ils viennent d'être décrits précédemment.

### Exemple 1

On a procédé au salage et au malaxage d'1 tonne de poitrine découennée dans le dispositif illustré sur la figure 1 en utilisant la technique telle que décrite dans le document EP-A-1 066 762.

Dans la cuve du malaxeur, à une température d'environ 6°C et à une pression comprise entre 30 et 50 mbar, on introduit pendant environ trois heures de la vapeur d'eau pour obtenir et maintenir une température, dans le produit alimentaire, de 25 à 28°C. Puis on augmente la valeur du vide appliqué à environ 5 mbar et on le maintient pendant une durée d'environ 1 heure.

Le produit ainsi obtenu est donc un produit salé, malaxé et maturé présentant un séchage de surface correspondant à une perte d'environ 2 % en poids par rapport au poids du produit tel qu'obtenu après salage, malaxage et maturation.

Puis, on introduit dans la cuve du malaxeur de la fumée provenant d'un générateur à combustion de bois de hêtre et on actionne l'extracteur. Après une circulation de la fumée dans la cuve du malaxeur pendant environ 6 heures, ledit malaxeur ayant une vitesse de rotation d'environ 1 tr/mn, on ferme la vanne d'arrivée de fumée et on procède alors au séchage par dépressurisation de la cuve en appliquant un vide d'environ 5 mbar. Après une période de séchage de 2 heures environ, la poitrine découennée et fumée est extraite du malaxeur.

On constate que celle-ci présente un bel aspect notamment quant à sa couleur et que par ailleurs ses propriétés gustatives sont excellentes.

### Exemple 2

On a procédé à la décongélation, au salage, au malaxage, à la maturation et au séchage partiel d'une tonne de filets de volaille dans le dispositif illustré sur la figure 2 en utilisant la technique décrite dans le document EP-A-1 066 762.

On a ainsi obtenu des filets malaxés, maturés et séchés en surface, c'est-à-dire des filets dont le poids est inférieur de 1 à 2 % à celui tel qu'obtenu après la phase de malaxage, salage et maturation.

Dans la cuve du malaxeur, maintenue à une pression d'environ 30 mbar, on introduit par atomisation un condensat liquide de fumée provenant d'un récipient relié à un système Venturi équipé d'une buse ou d'une aiguille de pulvérisation, pendant trente minutes. Pendant l'introduction du condensat liquide de fumée, on provoque la rotation de la cuve à une vitesse de 2 tr/mn.

Puis, on ferme la vanne d'introduction de l'agent de fumage et on procède au séchage selon le procédé décrit dans le document EP-A-1 066 762.

Après une période de séchage de 4 heures environ, les filets de volaille fumés sont extraits du malaxeur.

On constate que les filets présentent une coloration similaire à celle obtenue lors de la mise en oeuvre des procédés de fumage traditionnels. Le goût et l'odeur des filets obtenus sont également similaires à ceux de filets de volaille fumés selon le procédé traditionnel.

De plus, les filets fumés selon ce procédé peuvent être commercialisés sous l'appellation de produits fumés.

## Revendications

1. Procédé de préparation d'un produit alimentaire comprenant les étapes consistant à :
a) introduire dans la cuve (1 ; 101) d'un malaxeur un produit alimentaire,
b) malaxer ledit produit alimentaire ainsi introduit,
c) mettre en contact ledit produit alimentaire avec un agent de fumage dans ladite cuve du malaxeur,
ledit procédé comprenant en outre au moins une étape consistant à effectuer un séchage du produit alimentaire dans ladite cuve du malaxeur.

2. Procédé selon la revendication 1, dans lequel ladite cuve (1 ; 101) du malaxeur est montée rotative et dans lequel on provoque des rotations de la cuve de façon à obtenir un malaxage par retombées dudit produit alimentaire.

3. Procédé selon l'une quelconque des revendications 1 et 2, dans lequel ledit malaxeur est muni d'un organe de brassage et dans lequel on actionne ledit organe pour obtenir un malaxage par brassage dudit produit alimentaire.

4. Procédé selon l'une quelconque des revendications précédentes, dans lequel ladite cuve (1 ; 101) du malaxeur est reliée à un organe d'extraction de gaz (10 ; 21 ; 110) et dans lequel on actionne cet organe d'extraction de gaz pour établir dans la cuve une dépression par rapport à l'atmosphère ambiante, et l'on maintient cette dépression pendant au moins une partie de l'étape de malaxage.

5. Procédé selon l'une quelconque des revendications précédentes, dans lequel ledit agent de fumage est un agent de fumage gazeux produit par la combustion de bûches, de sciures ou de copeaux de bois.

6. Procédé selon la revendication 5, dans lequel on fait circuler ledit agent de fumage à l'intérieur de la cuve dudit malaxeur.

7. Procédé selon la revendication 6, dans lequel on fait circuler ledit agent de fumage à l'aide d'au moins un organe d'extraction de gaz (10 ; 21 ; 110) relié à ladite cuve du malaxeur.

8. Procédé selon l'une quelconque des revendications 5 à 7, dans lequel la durée de l'étape c) est comprise entre trois et huit heures, et en particulier comprise entre quatre et six heures.

9. Procédé selon l'une quelconque des revendications 1 à 4, dans lequel ledit agent de fumage est sous la forme d'un condensat liquide de fumée.

10. Procédé selon la revendication 9, dans lequel on introduit ledit condensat dans la cuve par atomisation.

11. Procédé selon la revendication 10, dans lequel on introduit dans la cuve de la vapeur d'eau pendant au moins une partie de l'étape d'introduction dudit condensat.

12. Procédé selon l'une quelconque des revendications 9 à 11, dans lequel pendant au moins une partie de l'introduction de l'agent de fumage, on maintient une dépression dans la cuve.

13. Procédé selon la revendication 12, dans lequel ladite dépression est établie en maintenant une pression comprise entre 20 et 45 mbar, et en particulier comprise entre 30 et 35 mbar.

14. Procédé selon l'une quelconque des revendications 9 à 13, dans lequel la durée de l'étape c) est comprise entre dix minutes et soixante minutes, et en particulier comprise entre vingt minutes et quarante minutes.

15. Procédé selon l'une quelconque des revendications précédentes, dans lequel ladite cuve (1 ; 101) du malaxeur est montée rotative, et dans lequel on provoque des rotations de ladite cuve pendant l'étape c).

16. Procédé selon la revendication 15, dans lequel la vitesse de rotation de ladite cuve est comprise entre 0,1 et 5 tr/mn, et en particulier comprise entre 0,5 et 1 tr/mn.

17. Procédé selon l'une quelconque des revendications précédentes, dans lequel ledit séchage, effectué en une ou plusieurs étapes, est conduit de façon à obtenir une perte en eau du produit alimentaire au moins égale à 4 % en poids par rapport au poids du produit alimentaire introduit.

18. Procédé selon la revendication 17, dans lequel, pour effectuer ledit séchage, on introduit dans ladite cuve, un gaz de séchage que l'on fait circuler, puis qu'on extrait de ladite cuve.

19. Procédé selon la revendication 17, dans lequel on effectue ledit séchage par extraction de gaz de façon à augmenter le vide dans la cuve pour l'obtention d'une pression comprise entre 2 et 10 mbar et en particulier de 3 à 7 mbar.

20. Procédé selon la revendication 17, dans lequel ladite étape de séchage comprend le fait (i) d'introduire un gaz de séchage, puis (ii) de dépressuriser la cuve à une pression de 2 à 10 mbar, et éventuellement de répéter les étapes (i) et (ii) autant de fois que désiré.

21. Procédé selon l'une quelconque des revendications précédentes, dans lequel on effectue une étape de séchage préalablement à l'étape c).

22. Procédé selon la revendication précédente, dans lequel on effectue ladite étape de séchage de façon que le poids du produit obtenu à l'issue de cette étape soit inférieur de 0,5 à 3 % au poids du produit obtenu avant ladite étape.

23. Procédé selon l'une quelconque des revendications précédentes, dans lequel on effectue une étape de séchage postérieurement à l'étape c).

24. Procédé selon l'une quelconque des revendications précédentes, dans lequel on effectue en outre une étape de maturation dudit produit alimentaire par élévation de température, par exemple par chauffage à une température d'au moins 10°C, en particulier comprise entre 20 et 40°C et notamment comprise entre 25 et 30°C.

25. Procédé selon l'une quelconque des revendications précédentes, dans lequel la température à l'intérieur de ladite cuve pendant toutes les étapes dudit procédé est inférieure ou égale à 45°C, en particulier inférieure ou égale à 30°C et par exemple inférieure ou égale à 25°C.

26. Dispositif pour la préparation d'un produit alimentaire malaxé et fumé, comprenant un malaxeur comportant une cuve (1 ; 101) munie d'une porte (8 ; 108) étanche à l'air pour le chargement et le déchargement des produits à traiter, au moins un moyen de malaxage, au moins un organe d'extraction de gaz (10 ; 21 ; 110), au moins un système d'introduction dans la cuve d'un agent de fumage (15 ; 115), et éventuellement au moins un système d'introduction d'un gaz de séchage (19 ; 19' ; 119).

27. Dispositif selon la revendication 26, dans lequel ladite cuve est montée rotative, ledit dispositif comprenant des moyens d'entraînement (5 ; 105) en rotation de ladite cuve.

28. Dispositif selon la revendication 27, dans lequel ladite cuve est rotative autour d'un axe horizontal ou faiblement incliné par rapport à l'horizontale.

29. Dispositif selon la revendication précédente, dans lequel l'axe fait un angle avec l'horizontale inférieur à 20°, et en particulier de 15° environ.

30. Dispositif selon la revendication 27, dans lequel ladite cuve est rotative autour d'un axe incliné par rapport à l'horizontale d'un angle inférieur à 50°, et en particulier de 45° environ.

31. Dispositif selon l'une quelconque des revendications 26 à 30, dans lequel ledit agent de fumage est sous forme liquide, et dans lequel le système d'introduction de l'agent de fumage est un système d'atomisation comprenant une aiguille de pulvérisation (120) débouchant dans la cuve.

32. Dispositif selon l'une quelconque des revendications 26 à 31, **caractérisé par le fait que** ladite porte étanche (8 ; 108) est munie d'un raccord (11 ; 111) apte à permettre la rotation de la cuve autour de son axe sans détérioration desdits organes d'extraction de gaz (10 ; 21 ; 110), système d'introduction d'un gaz de séchage (19 ; 19' ; 119) et/ou d'un agent de fumage (15 ; 115).

33. Dispositif selon la revendication précédente, **caractérisé par le fait que** l'organe d'extraction de gaz est relié audit raccord par une canalisation (9; 109) comportant au moins un second raccord (136, 137) apte à permettre la rotation des parties de ladite canalisation (9 ; 109) en amont (9 ; 109a) et en aval (9 ; 109b) dudit second raccord l'une par rapport à l'autre.
